# EUROPEAN PATENT APPLICATION

(11) **EP 1 640 867 A2**
(43) Date of publication of application: **29.03.2006**
(21) Application number: 04257042.4
(22) Date of filing: 12.11.2004
(51) Int. Cl.: G06F 11/14

(54) **System and method for offline archiving of data**

(30) Priority: 23.09.2004 US 948820
(71) Applicant: BakBone Software Inc., San Diego, California 92121 (US)
(72) Inventor: Barr, Eric, San Diego, 92130 California (US); Lee, Minh, Temecula, CA 92592 (US)
(74) Representative: Round, Edward Mark

(57) **Abstract**

A data archiving system according to the invention performs offline backup of data stored at a target system connected to a network. To minimize downtime of the target system, the data is archived at a low level of abstraction, e.g., at the block level, rather than at the file system level. The offline backup is accomplished by closing open files and application, and rebooting the target system with an archiving operating system that manages the data backup process. After the target data has been archived, the target system is rebooted with the normal operating system.

## Description

### TECHNICAL FIELD

The present invention relates generally to the archiving of computer data. More particularly, the present invention relates to the offline archiving of data residing on a target device.

### BACKGROUND

For a number of decades, information has been shared among computers in many various forms. One popular form that facilitates information sharing is known as the client/server model, which is commonly realized as a client/server network. In a client/server network, a server application is a software program (that resides on one or more pieces of computer hardware) that awaits and fulfills requests from any number of client applications. Server applications often manage the storage of vast amounts of data, to which one or many client applications have access.

As the client/server network increased in popularity the technology also advanced to enable a large number of client applications to access a single server application. This ability also increased the reliance on the server application, the need to reduce server failures, and the need to archive server data for disaster recovery purposes. To perform a data archive, the archiving system will schedule what is known in the art as a "backup job," which identifies a particular application, a file system, a drive, a target system, or the like, for archiving. Automated archiving systems are configured to perform backup jobs with little or no human intervention or interaction, i.e., the archiving of data occurs "automatically" in response to certain system parameters (for example, an automatic backup job may be performed periodically at scheduled times).

In practical applications, the systems being archived may maintain, store, or include extremely large amounts of data. Furthermore, it can be very important for such systems to remain active or "online" as much as possible. Therefore, conventional data archiving solutions strive to perform backup jobs without interrupting the target server system and without having to take the target server system offline. Such data archiving solutions archive the target system data by taking a "snapshot" of the target system data (including data associated with open files and data associated with the open target system operating system) at a particular moment in time. Open or active files may be associated with dynamic and rapidly changing data and, therefore, such files can be difficult to accurately archive and restore without corruption. Operating systems for a large scale server application can be particularly difficult to archive due to the vast amounts of constantly changing files corresponding to the large number of different users logging in and out of the server.

Accordingly, there is a need for a data archiving system and method that enables efficient and effective archiving of server data. Furthermore, other desirable features and characteristics of the present invention will become apparent from the subsequent detailed description and the appended claims, taken in conjunction with the accompanying drawings and the foregoing technical field and background.

### BRIEF SUMMARY

A practical data archiving system according to the invention performs offline backup jobs of a target server system in manner that reduces the amount of server downtime. The offline archiving of data is desirable to minimize or eliminate the number of open files prior to backing up the data, which maintains the integrity of the archived files. The data archiving system backs up the target storage device(s) at a relatively high level of abstraction (e.g., at the block level) to minimize the amount of offline time.

The above and other aspects of the invention may be carried out in one form by a method for archiving data of a target system having a target operating system. The method comprises closing the target operating system, rebooting the target system with an archive operating system in lieu of the target operating system, and archiving the data maintained by the target system. The archiving is performed while the archive operating system is active on the target system. In one practical embodiment, the archiving is performed at a block level, which expedites the archiving process.

### BRIEF DESCRIPTION OF THE DRAWINGS

A more complete understanding of the present invention may be derived by referring to the detailed description and claims when considered in conjunction with the following figures, wherein like reference numbers refer to similar elements throughout the figures.

FIG. 1 is a schematic representation of an example network in which the invention may be implemented;

FIG. 2 is a schematic representation of a portion of an example target system;

FIG. 3 is a schematic representation of a portion of an example archiving server system;

FIG. 4 is a schematic representation of example data stored on a storage media device associated with a target system;

FIG. 5 is a flow diagram of an offline data backup process that may be performed by an archiving system configured in accordance with the invention; and

FIG. 6 is a flow diagram of a target system rebooting process that may be performed by an archiving system configured in accordance with the invention.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

The invention may be described herein in terms of functional and/or logical block components and various processing steps. It should be appreciated that such block components may be realized by any number of hardware, software, and/or firmware components configured to perform the specified functions. For example, an embodiment of the invention may employ various integrated circuit components, e.g., memory elements, logic elements, look-up tables, or the like, which may carry out a variety of functions under the control of one or more microprocessors or other control devices. In addition, those skilled in the art will appreciate that the present invention may be practiced in conjunction with any number of computer hardware implementations, network configurations, data transmission protocols, and data storage formats, and that the system described herein is merely one exemplary application for the invention.

For the sake of brevity, conventional techniques and aspects of computer devices, computer networks, data transmission, data archiving, data communication, data storage, data storage media, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in a practical embodiment.

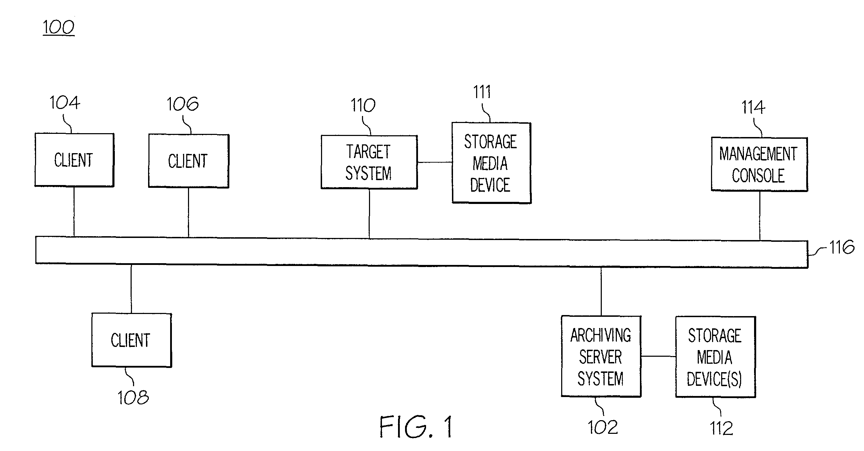

FIG. 1 is a schematic representation of an example network environment 100 that may incorporate the present invention. For ease of illustration, network environment 100 represents a simplified architecture; a practical architecture may have additional and/or alternative physical and logical elements. Network environment 100 generally includes an archiving server system 102, a number of client components 104, 106, and 108, a target system 110, at least one storage media device 111 for target system 110, at least one storage media device 112 for archiving server system 102, and a management console 114. Storage media device 111 may be coupled to target system 110, incorporated into target system 110, or otherwise configured to communicate with target system 110. Likewise, storage media device 112 may be coupled to archiving server system 102, incorporated into archiving server system 102, or otherwise configured to communicate with archiving server system 102. For purposes of this description, the use of the singular term "storage device" encompasses the plural term "storage devices" unless otherwise specified. The various network components may be coupled together via one or more communication links 116.

Target system 110 represents a server system that supports client components 104, 106, and 108 (in an actual deployment, target system 110 can support any number of client components, up to the practical operating limitations of target system 110). Archiving server system 102 and storage media device 112 function to archive backup the target system data and to restore the target system data in the event of a failure, disaster, or the like. In this regard, storage media device 112 can be periodically refreshed with current target system data to provide an effective recovery tool for target system 110. Management console 114 provides a user interface for monitoring, controlling, and otherwise administering the archiving system. Accordingly, management console 114 may be employed to access functional elements and/or software components residing at target system 110, the client components, archiving server system 102, or any device connected to the network.

In FIG. 1, archiving server system 102, the client components, target system 110, storage media device 111, and storage media device 112 represent physical hardware components, virtual machines, or logical components. Archiving server system 102 may be a computer configured to perform the archiving server application tasks described herein (and possibly other tasks), while the client components may be computers configured to perform tasks associated with various user applications. In this example deployment, the client components are configured to access data stored or otherwise maintained by target system 110. Generally, archiving server system 102 governs the backup storage of data maintained by target system 110 as further described herein. In a practical deployment, target system 110 may correspond to a first node in network environment 100 and archiving server system 102 may correspond to a second node in network environment 100.

As used herein, a "node" refers to a physical processing location in the network environment 100. In this regard, a node can be a computer or some other device, such as a printer. In practical networks, each node has a unique network address, sometimes called a Data Link Control ("DLC") address or Media Access Control ("MAC") address.

A "server" is often defined as a computing device or system configured to perform any number of functions and operations associated with the management, processing, storage, retrieval, and/or delivery of data, particularly in a network environment. Alternatively, a "server" or "server application" may refer to software that performs such processes, methods, and/or techniques. As in most commercially available general purpose servers, a practical server component that supports the archiving system of the invention may be configured to run on any suitable operating system such as Unix, Linux, the Apple Macintosh OS, or any variant of Microsoft Windows, and it may employ any number of microprocessor devices, e.g., the Pentium family of processors by Intel or the processor devices commercially available from Advanced Micro Devices, IBM, Sun Microsystems, or Motorola.

With regard to target server system 110 and archiving server system 102, the respective server processors communicate with system memory (e.g., a suitable amount of random access memory), and an appropriate amount of storage or "permanent" memory. For target system 110, storage media device 111 may represent such permanent memory. The permanent memory may include one or more hard disks, floppy disks, CD-ROM, DVD-ROM, magnetic tape, removable media, solid state memory devices, or combinations thereof. In accordance with known techniques, the operating system programs and the server application programs reside in the permanent memory and portions thereof may be loaded into the system memory during operation. In accordance with the practices of persons skilled in the art of computer programming, the present invention is described herein with reference to symbolic representations of operations that may be performed by the various server components or the client components. Such operations are sometimes referred to as being computer-executed, computerized, software-implemented, or computer-implemented. It will be appreciated that operations that are symbolically represented include the manipulation by the various microprocessor devices of electrical signals representing data bits at memory locations in the system memory, as well as other processing of signals. The memory locations where data bits are maintained are physical locations that have particular electrical, magnetic, optical, or organic properties corresponding to the data bits.

When implemented in software, various elements of the present invention (which may reside at the client components, at target system 110, or at archiving server system 102) are essentially the code segments or instructions that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

In practical applications, the archiving server system 102, target system 110, and the client components may be configured in accordance with any known computer platform, e.g., Compaq Alpha Tru64, FreeBSD, HP-UX, IBM AIX, Linux, NCR MP-RAS, SCO OpenServer, SCO Unixware, SGI Irix, Solaris (Sparc), Solaris (Intel), Windows 2000, Windows NT, or Novell Netware. In practical applications, storage media device 111 may be configured in accordance with any known hard drive or hard disk technology, e.g., storage media device 111 may incorporate one or more conventional hard drives as typically found in commercial computing devices such as personal computers, large scale network servers, and the like. Of course, the invention need not be limited to any particular type of storage technology and storage media device 111 may utilize different technologies that may be developed in the future. In practical applications, storage media device 112 may be configured in accordance with any known tape technology (DLT, 8 mm, 4 mm DAT, DTF, LTO, AIT-3, SuperDLT, DTF2, or M2), or any known optical disc technology (DVD-RAM, CD, or the like), or any of the storage media types used for storage media device 111. In practical applications, network environment 100 can also support any number of SAN/NAS devices, e.g., Ancor, Brocade, Chaparral, Crossroads, EMC, FalconStor, Gadzoox, Network Appliance, and Vixel. For the sake of brevity, these conventional devices and platforms will not be described herein.

A data archiving solution according to the invention may be carried out by target system 110 and archiving server system 102 to backup the target system data in an offline manner. Briefly, the data archiving technique closes the normal operating system ("OS") of target system 110 (and closes the files and applications associated with the normal OS of target system 110), reboots target system 110 with a "replacement" OS that is configured to manage and/or perform the archiving procedures described herein, and performs a backup of the target system data while the replacement OS is still active on target system 110. The offline nature of this backup routine reduces the likelihood of file corruption.

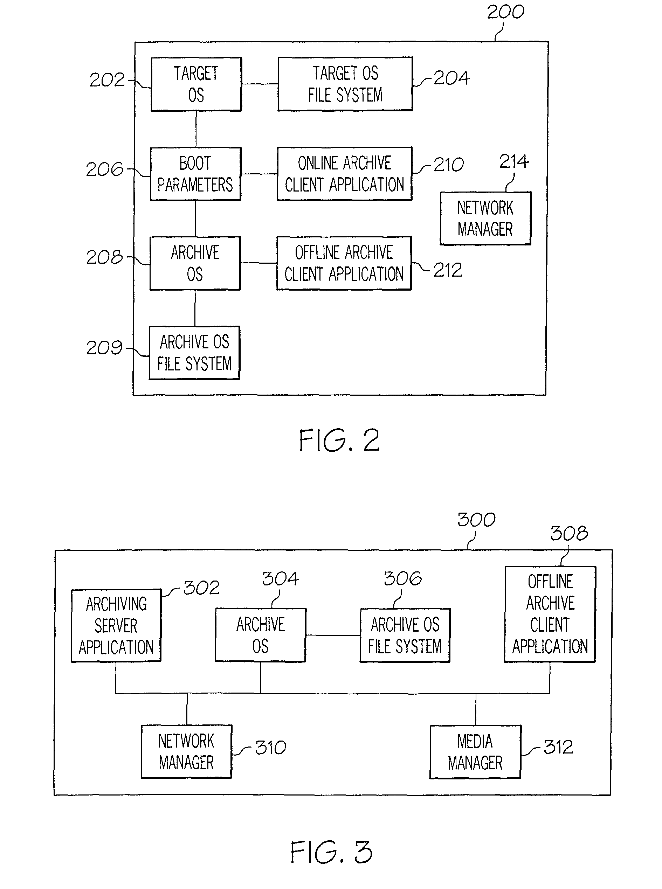

FIG. 2 is a schematic representation of a portion of an example target system 200 that may be utilized in an archiving system as described herein. Target system 200 includes a target OS 202 and a target OS file system 204 that is maintained by, managed by, or otherwise associated with target OS 202. In a practical embodiment, target OS 202 may be any variant of Unix, Linux, the Apple Macintosh OS, Microsoft Windows, or other suitable computer OS. Target OS file system 204 is suitably configured for compatible operation with target OS 202. Although not depicted in FIG. 2, target system 200 may support multiple operating systems and multiple corresponding file systems, and the invention need not be limited to a single OS. Fundamentally, target OS 202 and the structure and contents of target OS file system 204 are realized as data stored on a hard disk or other data storage media device incorporated into or otherwise associated with target system 200.

Target system 200 includes, maintains, or accesses a boot parameter sector 206. In a practical embodiment, boot parameter sector 206 may correspond to the BIOS of target system 200. As used herein, a "boot parameter" is an item of information or data that contributes to the initial configuration of a computing device or an item of information or data that impacts, directs, dictates, or influences the manner in which a computing device is initialized upon startup or reset. Example boot parameters include, without limitation, a BIOS program or any portion thereof, variables defined by a BIOS program, a network address of another network component such as an archiving server system or an archiving server application residing on the archiving server system, or a network boot request such as a BOOTP request. As described in more detail below, boot parameters contained in boot parameter sector 206 can be changed, modified, replaced, or updated by target system 200 as necessary to initialize target OS 202, an archive OS 208, or any other OS supported by target system 200. In this regard, for "normal" online operation, target system 200 can be booted in response to a first set of boot parameters that cause target OS 202 to be loaded. In contrast, for offline archiving operation, target system 200 can be booted in response to a second set of boot parameters that cause archive OS 208 to be loaded.

Archive OS 208 represents a replacement OS for target system 200 that manages, administers, controls, or otherwise facilitates the offline data backup procedures described herein. Archive OS 208 may be a scaled-down version of the default target OS 202; archive OS 208 need not implement the full functionality of target OS 202 and archive OS 208 may be specifically configured to provide and/or support the archiving features described herein. In this regard, target system 200 at times may include an archive OS file system 209 that is suitably configured for compatible operation with archive OS 208. In practice, the structure and configuration of archive OS file system 209 are compatible with the structure and configuration of target OS file system 204. This facilitates backing up of the target data in accordance with its native file structures.

In one preferred embodiment, archive OS 208 includes a sub-program that communicates with the BIOS of target system 200 such that the boot variables can be changed at will. Archive OS file system 209 may be included with archive OS 208, and archive OS file system 209 may contain files utilized by archive OS 208 and the archiving client application such that the archive OS file system 209 can be contained in memory and not located on a physical drive. Archive OS 208 may also include an automated program or application that carries out the automation processes that activate archive OS 208 on target system 200.

Target system 200 may also include an online archive client application 210. In a practical deployment, online archive client application 210 is accessible during normal online operation of target system 200, i.e., when target OS 202 is loaded. Accordingly, online archive client application 210 can be installed a priori at target system 200. Alternatively, online archive client application 210 can be dynamically installed or "pushed" to target system 200 only when needed, for example, in response to a backup job request. Online archive client application 210 performs a variety of functions for the archiving system as described herein. For example, online archive client application 210 may communicate with other applications or processes in the archiving system, communicate with specific applications, operating systems, and hardware in support of the archiving procedures, transfer data from specific applications, operating systems, or hardware to a device handler, and report backup job details to a job manager maintained at the archiving server system. Online archive client application 210 may also be configured to change the default boot parameter set in boot parameter sector 206 in response to a backup job request.

Target system 200 may also include an offline archive client application 212. In a practical deployment, offline archive client application 212 is accessible during offline operation of target system 200, i.e., when archive OS 208 is loaded. Offline archive client application 212 may be installed a priori at target system 200 and activated only in response to a backup job request or in response to the booting of archive OS 208. In this regard, offline archive client application 212 may share some or all of its software code with online archive client application 210. Alternatively, offline archive client application 212 can be dynamically installed or "pushed" to target system 200 only when needed, e.g., loaded along with archive OS 208. Offline archive client application 212 performs a variety of archiving client functions as described herein. For example, offline archive client application 212 may communicate with other applications or processes in the archiving system, communicate with specific applications, operating systems, and hardware in support of the archiving procedures, transfer data from specific applications, operating systems, or hardware to a device handler, and report backup job details to a job manager maintained at the archiving server system. Although it may be impractical for offline archive client application 212 to communicate with target OS 202 or its related applications, such communication may be possible. Offline archive client application 212 may also be configured to change the archive boot parameter set in boot parameter sector 206 in response to completion of a backup job.

Target system 200 also includes a network manager 214, which handles communications with other systems, subsystems, and components in the network via one or more network paths, communication links, or the like. For example, network manager 214 facilitates communication between the target system 200 and: archiving server system 102, the OS of archiving server system 102, management console 114, etc. Network managers are known to those skilled in the art and details of their operation are not addressed herein.

FIG. 3 is schematic representation of an example archiving server system 300 that may be utilized in an archiving system as described herein. Archiving server system 300 includes an archiving server application 302 that manages the archiving, backup, and restore functions described herein. In a practical implementation, a single archiving server system can be flexibly configured to support any number of target systems. In response to a backup job request associated with a target system (such as target system 110), archiving server system 300 may provide a copy of an archive OS 304 to the requesting target system. The archive OS 304 may include a suitably configured archive OS file system 306, as described above in connection with target system 200. In response to the backup job request, archiving server system 300 may also provide a suitably configured offline archive client application 308 (described above in connection with target system 200) that can be loaded onto the requesting target system to facilitate the offline archiving operations. In practice, archive OS 304 may reside on the hard disk of the archiving server system 300, on portable media (e.g., a CD-ROM, a DVD-ROM, or the like) accessible via archiving server system 300, or on portable media attached to target system 200.

Archiving server system 300 also includes a network manager 310 and a media manager 312. Network manager 310 handles communications with other systems, subsystems, and components in the network environment via one or more network paths, communication links, or the like. For example, network manager 310 may handle communication between archiving server system 300 and: storage media device 112; target system 110; storage media device 111; management console 114, etc. Network managers are known to those skilled in the art and details of their operation are not addressed herein. Media manager 312 handles the storage media device(s) for archiving server system 300. For example, media manager 312 monitors and/or handles the availability of the storage media devices, the type of storage media utilized by the devices, the physical network location of the storage devices, which target system nodes have access to the particular storage devices, and how best to actually store the target system data. Network manager 310 and media manager 312 may be controlled by archiving server application 302 and/or by the operating system (not shown) for archiving server system 300.

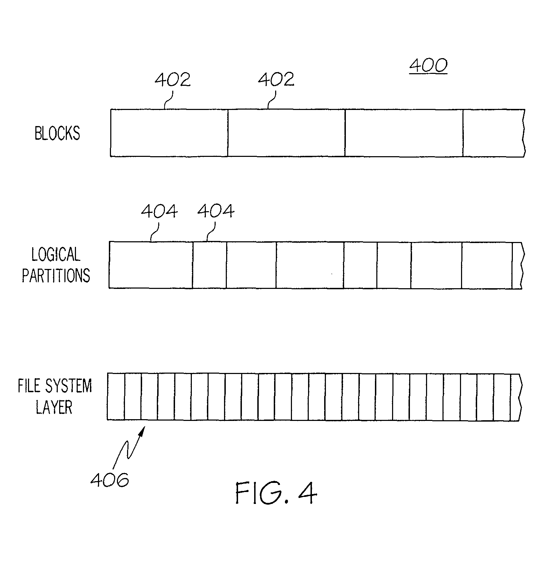

FIG. 4 is a schematic representation of example data stored on a storage media device 400 associated with a target system. As one example, FIG. 4 may represent a memory architecture of a hard disk storage device incorporated into, coupled to, or in communication with the target system. Storage media device 400 may be arbitrarily divided into any number of blocks 402 that represent the stored data at a low level of abstraction. In practice, a hard disk usually includes one or more metallic platters. These platters are divided into tracks, sectors, and blocks. A track represents a concentric circle or ring on the surface of the platter and, a sector represents an area of the platter (a sector can be visualized as a "pie slice" of the platter), and a block is the information stored on a sector for a given track. Notably, data stored at the block level have no file or application context associated therewith and such data may be considered to be raw data. In other words, data at the block level is merely a collection of "1" bits and "0" bits. The data stored at blocks 402 may be grouped into any number of logical partitions 404. For example, one partition may correspond to a Linux OS, one partition may correspond to a Windows OS, and the like. The data stored on storage media device 400 can be further distinguished at the file system layer 406. At this layer, the data assumes contextual meaning in terms of specific file structures, file names, applications, and the like. In practice, each OS maintained on storage media device 400 has a distinct file system resident at file system layer 406. It should be appreciated that the above description of storage media device 400 is but one illustrative example and that a practical storage device can be configured and partitioned in any number of different ways.

A data archiving system according to the invention can perform block-level data backup while the target system is offline, i.e., when the target system OS, files, and applications are closed. Closing the files and applications results in little or no data corruption upon restore because the data is static while the data archiving system performs the backup. In addition, the data archiving system can efficiently copy blocks 402 and store that data without regard to the file structures, file systems, or logical data partitions. The data archiving system can also archive data at the partition level when the partition information is decipherable (e.g., Solaris and Windows applications). The block-level technique enables backup and recovery of larger data intensive systems in an expedited manner relative to conventional methodologies. Even though the target system is taken offline briefly, the actual downtime is manageable, especially if scheduled during periods of low server activity.

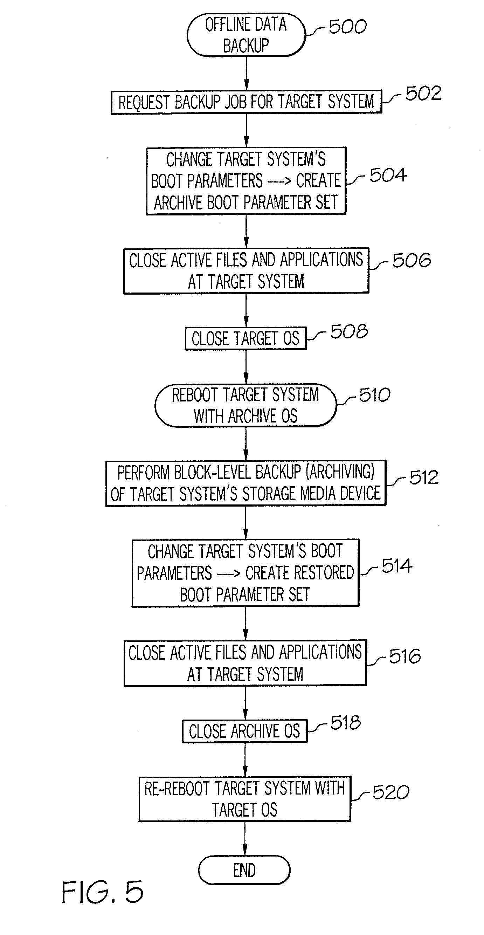

FIG. 5 is a flow diagram of an offline data backup process 500 that may be performed by an archiving system configured in accordance with the invention. The various tasks performed in connection with process 500 may be performed by software, hardware, firmware, or any combination thereof. For illustrative purposes, the following description of process 500 may refer to elements mentioned above in connection with FIGS. 1-4. In practical embodiments, portions of process 500 may be performed by different elements of the archiving system, e.g., target system 110, target OS 202, online archive client application 210, offline archive client application 212, archive OS 208, archiving server system 102, archiving server application 302, and the like. It should be appreciated that process 500 may include any number of additional or alternative tasks, the tasks shown in FIG. 5 need not be performed in the illustrated order, and process 500 may be incorporated into a more comprehensive archiving process or program having additional functionality not described in detail herein.

Offline data backup process 500 assumes that a suitably configured automatic data backup program has already been installed at the target system and that a suitable backup job has already been configured (e.g., schedule, restore content, restore location, and other parameters are in place). The automatic data backup program may be, for example, online archive client application 210. Process 500 also assumes that target system 110 has access to certain information that is utilized by target system 110 to initiate the rebooting procedure. This information may include, without limitation, a network identifier (e.g., the network address) for archiving server system 102, a network identifier (e.g., the network address) for an archiving server application residing on archiving server system 102, or a suitably configured network boot request (e.g., a BOOTP request) that enables target system 110 to poll the network for suitable boot information. In a practical embodiment, this information can be stored at target system 110 and provided via online archive client application 210.

Offline data backup process 500 may begin with a task 502, which requests a backup job for target system 110. This backup request may be generated by a suitable scheduler maintained by the archiving system (the scheduler may reside at target system 110, archiving server system 102, management console 114, or any network location), or generated in response to a user input at management console 114. In the practical embodiment, archiving server application 302 requests the backup job, and the request identifies target system 110. In response to the job request, backup job details can be retrieved from a suitable memory location; such information is ultimately used when performing the backup job.

In response to the backup job request, process 500 changes at least one boot parameter of target system 110, thus creating an archive boot parameter set (task 504). Portions of task 504 may be performed by different elements of the archiving system, e.g., target system 110, target OS 202, online archive client application 210, archiving server system 102, archiving server application 302, and the like. In this regard, these elements and their corresponding software elements, individually or in combination, are example means for changing the default boot parameters of target system 110. In the example embodiment, online archive client application 210 alters the default or normal boot parameter set or replaces the default or normal boot parameter set to create the archive boot parameter set. The archive boot parameter set is configured to cause target system 110 to reboot with archive OS 208 in lieu of target OS 202. In one practical embodiment, the archive boot parameter set is configured to cause target system 110 to boot from a network location such as the archiving server application residing at archiving server system 102. Thus, process 500 instructs target system 110 to reboot from a different location or source, thus activating archive OS 208 to facilitate archiving of data maintained by target system 110 under the control of archive OS 208.

To ensure that the normal target OS 202 is not loaded upon rebooting, the archive boot parameter set may include information that directs target system 110 to boot from a different source. As mentioned above, the archive boot parameter set may include the network address of archiving server system 102, the network address of archiving server application 302, and/or a suitably configured network boot request. Depending upon the particular implementation, the network address contained in the archive boot parameter set may be an "IP address" as used in its conventional sense, namely, an identifier for a computer or device on a TCP/IP compatible network. Messages are routed within such networks using the IP address of the desired destination. In accordance with current standards, the format of an IP address is a 32-bit numeric address written as four numbers separated by periods, where each number can be 0 to 255. For example, 1.234.56.78 could be an IP address. Furthermore, in practical networks, each node has a unique network address, sometimes called a Data Link Control ("DLC") address or Media Access Control ("MAC") address. Thus, the network address in the archive boot parameter set may be a DLC address, a MAC address, or any equivalent type of identifier. In the practical embodiment, the archiving system employs a naming convention that assigns different "machine names" for the various nodes within the network environment. Accordingly, the archive boot parameter set may include a unique machine name for archiving server system 102. The network manager(s) and/or other components of the system may handle the translation of a machine name to an address identifier (e.g., an IP address) compatible with the network or operating systems.

Prior to rebooting of target system 110, offline data backup process 500 closes any active files and applications maintained by target system 110 (task 506). In a preferred practical embodiment, task 506 is performed automatically by target system 110 - target OS 202 in particular - in response to the backup job request. Alternatively, process 500 may simply provide a prompt or a notification related to the closure of the open files and applications. Prior to rebooting of target system 110, process 500 also closes target OS 202 (task 508). In the preferred practical embodiment, task 508 is performed automatically by target system 110 - target OS 202 in particular - in response to the backup job request. Generally, the closure of target OS 202 may be performed, controlled, or governed by online archive client application 210, target OS 202 itself, or any functional component of target system 110. In this regard, target system 110, online archive client application 210, target OS 202, and their corresponding software elements, individually or in combination, are example means for closing target OS 202. Tasks 506 and 508 prepare target system 110 for shut down, resetting, and offline operation with archive OS 208.

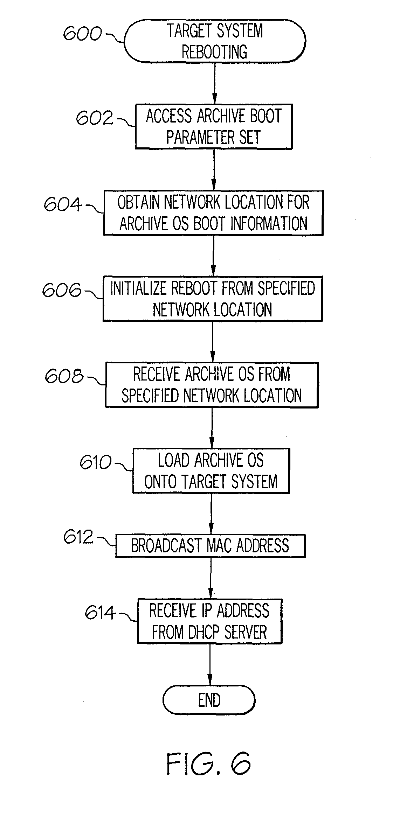

Next, offline data backup process 500 reboots target system 110 with archive OS 208 in lieu of target OS 202 (task 510). Archive OS file system 209 may also be created at this time. An example target system rebooting process is described in more detail below in connection with FIG. 6. Briefly, task 510 accesses the archive boot parameter set, which directs target system 110 to reboot using archive OS 208. Once target system 110 has been rebooted, process 500 archives the data maintained by target system 110 (the archiving procedure occurs while archive OS 208 is active on target system 110). Referring again to the example shown in FIG. 1, the archiving procedure backs up the target data stored in storage media device 111, via the network environment 100, and stores a recovery copy of the target data at storage media device 112. Portions of the archiving procedure may be carried out by different elements of the archiving system, e.g., target system 110, archive OS 208, archive OS file system 209, offline archive client application 212, archiving server system 102, archiving server application 302, storage media device 111, storage media device 112, and the like. In this regard, these elements and their corresponding software elements, individually or in combination, are example means for archiving the target data. The specific manner in which the actual archiving procedure is carried out (e.g., the accessing, transfer, and storage of data using network environment 100) is not important to the invention described herein and, indeed, process 500 may leverage any number of well known techniques to accomplish the actual data transfer.

In accordance with the example embodiment, offline data backup process 500 archives the target data by performing a block-level backup of storage media device 111 (task 512). As described above in connection with FIG. 4, process 500 can perform a high-level archive of the target data (since no files or applications are open) and backup the raw block-level data without regard to file structure, file system information, or logical partition information. This expedites the actual backup process, which in turn reduces the downtime of target system 110. In practice, aspects of task 512 may be performed by storage media device 111, storage media device 112, and target system 110 under the control of archiving server system 102.

After the data for target system 110 has been archived, offline data backup process 500 changes at least one boot parameter of the archive boot parameter set, thus creating a restored boot parameter set (task 514). In the example embodiment, offline archive client application 212 alters the existing boot parameter set or replaces the existing boot parameter set to restore the default or normal boot parameter set. The restored boot parameter set is configured to cause target system 110 to reboot with target OS 202 in lieu of archive OS 208. In the example embodiment, the restored boot parameter set is configured to cause target system 110 to boot with target OS 202 in a conventional manner.

Prior to re-rebooting of target system 110, offline data backup process 500 closes any active files and applications maintained by target system 110 (task 516). Task 516 need not be performed in practical deployments unless another archiving server application is actively backing up the same target system. Backup operations of multiple archiving server applications can proceed simultaneously except when one applications wants to restart the system before the other has completed its operation. In one embodiment, task 516 is performed automatically by target system 110 - by archive OS 208 in particular. Alternatively, process 500 may simply provide a prompt or a notification related to the closure of the open files and applications. Prior to re-rebooting of target system 110, process 500 also closes archive OS 208 (task 518). In the preferred practical embodiment, task 518 is also performed automatically by target system 110 - by archive OS 208 in particular. Tasks 516 and 518 prepare target system 110 for shut down, resetting, and resumed online operation with target OS 202. In practice, task 516 may be realized in connection with task 518.

Next, offline data backup process 500 re-reboots target system 110 with target OS 202 in lieu of archive OS 208 (task 520). Briefly, task 520 accesses the restored boot parameter set, which instructs target system 110 to reboot using target OS 202. Once target system 110 has been rebooted, process 500 ends and target system operates in its normal online manner.

FIG. 6 is a flow diagram of a target system rebooting process 600 that may be performed by an archiving system configured in accordance with the invention. The various tasks performed in connection with process 600 may be performed by software, hardware, firmware, or any a combination thereof. For illustrative purposes, the following description of process 600 may refer to elements mentioned above in connection with FIGS. 1-3. In practical embodiments, portions of process 600 may be performed by different elements of the archiving system, e.g., target system 110, archiving server system 102, archiving server application 302, and the like. In this regard, these elements and their corresponding software elements, individually or in combination, are example means for rebooting target system 110 with archive OS 208. It should be appreciated that process 600 may include any number of additional or alternative tasks, the tasks shown in FIG. 6 need not be performed in the illustrated order, and process 600 may be incorporated into a more comprehensive archiving process or program having additional functionality not described in detail herein.

Target system rebooting process 600 is performed upon reset of target system 110 (see FIG. 5). Process 600 may be performed in connection with task 510 of offline data backup process 500. Process 600 may begin by accessing the archive boot parameter set maintained at target system 110 (task 602). As mentioned above, the archive boot parameter set represents an altered version of the default or normal boot parameter set utilized by target system 110. In the example embodiment, the archive boot parameter set includes data that causes target system 110 to boot from the network. Thus, process 600 obtains the network location for the archive OS boot information (task 604), which directs the boot process to a specified network location.

In a practical implementation, the archive boot parameter set includes the network address of archiving server system 102 or the network address of archiving server application 302, where the network address uniquely identifies the location for the archive OS boot information. Alternatively, the archive boot parameter set may include a network boot request (e.g., a BOOTP request), that enables target system 110 to interrogate or poll the network for the necessary boot information. The Bootstrap Protocol ("BOOTP") is a protocol that allows a network user to be automatically configured (receive an IP address) and have an OS booted without user involvement. A BOOTP server, managed by a network administrator, automatically assigns the IP address from a pool of addresses for a certain duration of time. In accordance with the Bootstrap Protocol, network components will receive BOOTP requests and provide suitable boot information where necessary. In response to a BOOTP request, archiving server system 102 or any suitable application or service located on the service responds by distributing the relevant boot information to target system 110. In practice, the boot information (which in the example embodiment includes an image containing the archive OS, the archive OS file system, and the offline archive client application) may be distributed using the Trivial File Transfer Protocol ("TFTP") or any suitable data communication technique. The boot information is preferably "thin" such that it can be stored on portable media having limited storage capacity, e.g., a 1.44 megabyte floppy disk. Conventional aspects of TFTP, the Boot Protocol, and BOOTP requests are known to those skilled in the art and, therefore, will not be described in detail herein.

In response to the task 604, target system rebooting process 600 initializes the rebooting procedure from the applicable network location (task 606) or portable storage media. In one practical implementation, archiving server system 102 makes archive OS 208 and archive OS file system 209 available to target system 110. Task 606 may also make offline archive client application 212 available to target system 110. In this regard, archiving server system 102 may have archive OS 208 stored on storage media device 112, on its hard disk, or on portable storage media such as a CD-ROM. Eventually, target system 110 receives archive OS 208 from the specified network location (task 608) and process 600 loads archive OS 208 onto target system 110 (task 610). The archive boot parameter set may provide further instructions or information that governs the booting of archive OS 208.

In one practical embodiment, once archive OS 208 is running, it broadcasts its MAC address over the network (task 612). The MAC address is received and processed by a suitably configured DHCP (Dynamic Host Configuration Protocol) server, which resolves the MAC address and provides an IP address for target system 110. Briefly, DHCP is a communication protocol for the automated management of IP address assignment within a network. Using DHCP, a network administrator can supervise and distribute IP addresses from a central point and automatically provide IP addresses as needed. Target system 110 eventually receives the IP address from the DHCP server (task 614), and that IP address facilitates messaging between target system 110 and archiving server system 102. Tasks 612 and 614 may represent conventional DHCP routing procedures and, therefore, such procedures will not be described in detail herein.

It should be appreciated that multiple instances of offline data backup process 500 may be performed concurrently or in a staggered fashion to archive any number of target systems connected to a network. Such multiple target systems can be supported by a single archiving server system 102 or by any number of archiving server systems. To accomplish concurrent offline archiving of multiple target systems, the archiving server system loads a copy of the archive OS onto each target system.

An archiving system may also be configured to perform an automated offline restore procedure that leverages the techniques described above. Briefly, the restore procedure changes the normal boot parameters of the target system to be restored such that the target system can be rebooted from the network using a replacement OS. Similar to the archiving procedure described above, the restore procedure may change the normal boot parameters so that they cause the target system to boot from a predetermined archiving server system. Upon rebooting, the target system can be restored in an offline manner with the archived data stored at one or more storage media devices. Thereafter, the boot parameters of the target system are restored and the target system is rebooted with its normal OS to resume online operation.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims and the legal equivalents thereof.

## Claims

1. A method for archiving data of a target system having a target operating system ("OS"), said method comprising:
closing said target OS;
rebooting said target system with an archive OS in lieu of said target OS; and
archiving, while said archive OS is active on said target system, data maintained by said target system.

2. A method according to claim 1, further comprising closing, prior to rebooting said target system, open files maintained by said target system.

3. A method according to claim 1, further comprising closing, prior to rebooting said target system, open applications maintained by said target system.

4. A method according to claim 1, wherein said archiving step performs a block level backup of a storage media device for said target system.

5. A method according to claim 1, further comprising changing, prior to rebooting said target system, at least one boot parameter of said target system to create an archive boot parameter set.

6. A method according to claim 5, wherein said archive boot parameter set is configured to cause said target system to reboot with said archive OS.

7. A method according to claim 5, wherein:
said target system corresponds to a first node in a network; and
said archive boot parameter set is configured to cause said target system to boot from an archiving server system corresponding to a second node in said network.

8. A method according to claim 7, wherein said archive boot parameter set comprises a network identifier for said archiving server system.

9. A method according to claim 7, wherein said archive boot parameter set comprises a network identifier for an archiving server application residing at said second node in said network.

10. A method according to claim 7, wherein said archive boot parameter set comprises a network boot request.

11. A method according to claim 7, wherein said archive boot parameter set comprises a portable media boot request.

12. A method according to claim 1, wherein:
said target system corresponds to a first node in a network; and
said method further comprises receiving, prior to rebooting said target system, said archive OS from a second node in said network.

13. A method according to claim 1, further comprising re-rebooting said target system with said target OS in lieu of said archive OS, said re-rebooting step occurring after said archiving step.

14. A method according to claim 13, further comprising changing, prior to re-rebooting said target system, at least one boot parameter of said archive boot parameter set to create a restored boot parameter set.

15. A method according to claim 14, wherein said restored boot parameter set is configured to cause said target system to reboot with said target OS.

16. A system for archiving data of a target system having a target operating system ("OS"), said system comprising:
means for closing said target OS;
means for rebooting said target system with an archive OS in lieu of said target OS; and
means for archiving, while said archive OS is active on said target system, data maintained by said target system.

17. A system according to claim 16, wherein said means for archiving is configured to perform a block level backup of a storage media device for said target system.

18. A system according to claim 16, further comprising means for changing, prior to rebooting said target system, at least one boot parameter of said target system to create an archive boot parameter set.

19. A system according to claim 18, wherein said archive boot parameter set is configured to cause said target system to reboot with said archive OS.

20. A computer program embodied on computer-readable media, said computer program having computer-executable instructions comprising:
instructions for closing said target OS;
instructions for rebooting said target system with an archive OS in lieu of said target OS; and
instructions for archiving, while said archive OS is active on said target system, data maintained by said target system.

21. A computer program according to claim 20, further comprising instructions for changing, prior to rebooting said target system, at least one boot parameter of said target system to create an archive boot parameter set.

22. A computer program according to claim 20, wherein:
said target system corresponds to a first node in a network; and
said computer program further comprises instructions for receiving, prior to rebooting said target system, said archive OS from a second node in said network.

23. A computer program according to claim 20, further comprising instructions for re-rebooting said target system with said target OS in lieu of said archive OS, said re-rebooting occurring after archiving of said data.

24. A computer program according to claim 23, further comprising instructions for changing, prior to re-rebooting said target system, at least one boot parameter of said archive boot parameter set to create a restored boot parameter set.

25. A system for archiving data, said system comprising:
a target system;
a target operating system ("OS") for said target system;
an archive OS for said target system; and
an archiving client application for said target system, said archiving client application being configured to prompt rebooting of said target system with said archive OS in lieu of said target OS to facilitate archiving of data maintained by said target system while said archive OS is active on said target system.

26. A system according to claim 25, further comprising a storage media device for said target system, wherein said archive OS facilitates block level backup of said storage media device.

27. A system according to claim 25, further comprising a boot parameter set for said target system, wherein said archiving client application is further configured to change, prior to rebooting of said target system, at least one boot parameter of said boot parameter set to create an archive boot parameter set.

28. A system according to claim 27, wherein said archive boot parameter set is configured to cause said target system to reboot with said archive OS.

29. A system according to claim 27, wherein:
said target system corresponds to a first node in a network; and
said archive boot parameter set is configured to cause said target system to boot from an archiving server system corresponding to a second node in said network.

30. A system according to claim 29, wherein said archive boot parameter set comprises a network address for said archiving server system.

31. A method according to claim 29, wherein said archive boot parameter set comprises a network address for an archiving server application residing at said second node in said network.

32. A method according to claim 29, wherein said archive boot parameter set comprises a network boot request.

33. A method for archiving data of a target system having a target operating system ("OS"), said method comprising:
changing at least one boot parameter of said target system to create an archive boot parameter set;
closing open files and open applications maintained by said target system;
rebooting, in response to said archive boot parameter set, said target system with an archive OS in lieu of said target OS;
archiving, while said archive OS is active on said target system, data maintained by said target system;
changing at least one boot parameter of said archive boot parameter set to create a restored boot parameter set; and
re-rebooting, in response to said restored boot parameter set, said target system with said target OS in lieu of said archive OS.

34. A method according to claim 33, wherein said archiving step performs a block level backup of a storage media device for said target system.

35. A method according to claim 33, wherein:
said target system corresponds to a first node in a network; and
said archive boot parameter set is configured to cause said target system to boot from an archiving server system corresponding to a second node in said network.

36. A method according to claim 35, wherein said archive boot parameter set comprises a network identifier for said archiving server system.
